Europäisches Patentamt

European Patent Office

Office européen des brevets

(11) Veröffentlichungsnummer : **0 069 900**
**B1**

(12)

# EUROPÄISCHE PATENTSCHRIFT

(45) Veröffentlichungstag der Patentschrift :
13.03.85

(21) Anmeldenummer : 82105676.9

(22) Anmeldetag : 26.06.82

(51) Int. Cl.⁴ : **B 62 H   5/02**, E 05 B 63/00,
E 05 C   1/06

(54) Zylinderschloss mit axial beweglichem Sperrzapfen.

(30) Priorität : 11.07.81 DE 3127484

(43) Veröffentlichungstag der Anmeldung :
19.01.83 Patentblatt 83/03

(45) Bekanntmachung des Hinweises auf die Patenterteilung : 13.03.85 Patentblatt 85/11

(84) Benannte Vertragsstaaten :
AT BE DE FR GB IT NL SE

(56) Entgegenhaltungen :
DE-A- 2 702 324
DE-C-   635 701

(73) Patentinhaber : NEIMAN S.A.
39, Avenue Marceau
F-92400 Courbevoie (FR)

(72) Erfinder : Bemm, Wulf, Dipl.-Ing.
Römer Strasse 43
D-5000 Köln 50 (DE)
Erfinder : Wolffgang, Günter
Flexstrasse 12
D-5600 Wuppertal 22 (DE)
Erfinder : Schaumburg, Günter
D.-Bonhoeffer-Strasse 23
D-5608 Radevormwald (DE)

(74) Vertreter : Patentanwaltsbüro Cohausz & Florack
Postfach 14 01 47
D-4000 Düsseldorf 1 (DE)

EP 0 069 900 B1

## Beschreibung

Die Erfindung betrifft ein Schloß mit einem in einer Bohrung eines Zylindergehäuses drehbar gelagerten, Zuhaltungen aufweisenden, axial nicht beweglichen Zylinderkern, durch den ein koaxialer Sperrzapfen über Stift und Kurvenbahn axial bewegt wird.

Ein derartiges Schloß ist aus der DE-C-835 701 bekannt. Soll bei diesem bekannten Schloß ein großer Verschiebeweg des Sperrzapfens erreicht werden, so kann dies nur durch einen größeren Drehwinkel und/oder eine größere Steigung der Kurvenbahn erreicht werden. Ein größerer Drehwinkel führt zu einem geringeren Bedienungskomfort und ist auch deshalb nicht durchführbar, da bei vielen Schlössern als auch bei den angeschlossenen Schaltern der Drehweg festliegt. Eine stärkere Steigung der Kurvenbahn erschwert die Betätigung des Schlosses und führt zu einer größeren axialen Baulänge.

Aufgabe der Erfindung ist es, ein Schloß der eingangs genannten Art derart zu verbessern, daß bei kleinem Drehwinkel ein großer Verschiebeweg des Sperrzapfens erreicht und eine geringe axiale Länge des Schlosses erzielt wird. Darüber hinaus ist es Aufgabe der Erfindung, den Kraftaufwand für die Drehbetätigung des Schlosses zu verringern.

Diese Aufgaben werden erfindungsgemäß dadurch gelöst, daß auf der der Schlüsseleinführung gegenüberliegenden Seite des Zylinderkerns im drehfesten Zylindergehäuse ein buchsenförmiger, koaxialer Steuerring gelagert ist, der durch den Zylinderkern drehbar ist und durch eine nuten- oder schlitzförmige Kurvenbahn und darin einliegenden Nocken aufgrund des Drehens axial gegenüber dem Zylinderkern verschiebbar ist, und daß innen im Steuerring das Ende eines drehfesten Sperrzapfens gelagert ist, der durch eine weitere nuten- oder schlitzförmige Kurvenbahn mit darin einliegenden Nocken gegenüber dem Steuerring aufgrund des Drehens des Steuerrings verschiebbar ist.

Das erfindungsgemäße Schloß erreicht im Verhältnis zum Drehwinkel einen sehr großen Verschiebeweg des Sperrzapfens, da sich der Verschiebeweg beider Kurvenbahnen addiert. Darüber hinaus ist die axiale Länge des Schlosses sehr gering, da die beiden Kurvenbahnen einander überdecken, d. h. im gleichen Erstreckungsraum einer Kurvenbahn wird ein zusätzlicher Verschiebeweg durch die zweite Kurvenbahn erreicht. Beide Steuerkurven arbeiten formschlüssig, so daß die Stellung des Sperrzapfens immer direkt abhängig ist von der Drehstellung des Zylinderkerns. Es entstehen somit keine undefinierten Stellungen des Sperrzapfens und somit eine hohe Sicherheit gegen ein unbeabsichtigtes Sperren durch den Sperrzapfen.

. Vorzugsweise wird vorgeschlagen, daß der Zylinderkern zum Antrieb des Steuerringes einen an einem koaxialen, vorspringenden Zapfen angeordneten radialen Vorsprung aufweist, der in einer inneren achsparallelen Längsnut des Steuerringes einliegt. Eine solche Kupplung des Zylinderkerns am Steuerring ist konstruktiv einfach, von hoher Sicherheit und klein bauend. Vorzugsweise wird hierzu auch vorgeschlagen, daß die Längsnut des Steuerringes von einer inneren Verstärkung gebildet wird.

Eine besonders geringe Baulänge in axialer Richtung wird dadurch erreicht, daß der Sperrzapfen am inneren Ende eine Ausnehmung, insbesondere Anflachung zur Aufnahme des Vorsprungs des Zylinderkerns und der Verstärkung des Steuerringes aufweist. Der Sperrzapfen kann dadurch den Steuerring in seiner gesamten Länge durchdringen.

Eine geringe Baulänge des Schlosses wird auch dadurch erreicht, daß bei eingefahrenem Sperrzapfen der koaxial vorspringende Zapfen des Zylinderkerns in einer zylindrischen Ausnehmung des Sperrzapfens einliegt.

Eine konstruktiv besonders einfache Ausführungsform bei zusätzlich geringem Durchmesser des Schlosses wird dadurch erreicht, daß der Steuerring an seiner Außenseite einen radialen Nocken aufweist, der in einer kurvenförmigen Nut in der Innenwandung des Zylindergehäuses einliegt. Ferner wird hierzu vorgeschlagen, daß der Sperrzapfen einen radialen Nocken an seiner Außenseite aufweist, der in einer kurvenförmigen Nut oder Schlitz in dem Steuerring einliegt.

Vorzugsweise wird vorgeschlagen, daß der Nocken des Sperrzapfens den Schlitz des Steuerringes durchdringt und mit seinem freien Ende in einer achsparallelen Längsnut des Zylindergehäuses einliegt. Hierdurch wird der Sperrzapfen drehfest gelagert.

Damit die Kupplung zwischen Zylinderkern und Steuerring nicht zu lang wird und damit die axiale Baulänge des Schlosses klein bleibt, wird vorgeschlagen, daß die den Steuerring axial bewegende Kurvenbahn eine geringere Neigung aufweist als die im Steuerring angeordnete Kurvenbahn.

Eine weitere Sicherung gegen ein unbeabsichtigtes Sperren durch den Sperrzapfen wird dadurch erreicht, daß der Sperrzapfen durch eine Feder in das Zylindergehäuse hinein beaufschlagt ist. Hierzu wird auch vorgeschlagen, daß der Zylinderkern durch eine Drehfeder beaufschlagt ist. Dabei kann die Drehfeder eine Drahtwicklung von weniger als 360 Grad sein, die zur Schloßlängsachse in einer Querebene in Höhe des inneren Zylinderkernendes liegt.

Vorzugsweise wird vorgeschlagen, daß die den Steuerring axial bewegende Kurvenbahn eine Vertiefung aufweist, in der der Nocken in der Schlüsselabzugsstellung durch die Feder des Sperrzapfens gedrückt wird. Diese Rastausnehmung sorgt dafür, daß die Drehfeder den Zylinderkern in dieser Drehstellung nicht drehend beaufschlagt, so daß die Zuhaltungen bei Abziehen oder Einführen des Schlüssels nicht unter Spannung stehen.

Ein vorteilhaftes Ausführungsbeispiel der Erfindung ist in den Zeichnungen dargestellt und wird im folgenden näher beschrieben. Es zeigen :

Figur 1 einen Längsschnitt durch das Schloß in entsperrter Stellung ;

Figur 2 einen Schnitt nach I-I in Fig. 1 ;

Figur 3 einen Längsschnitt durch das Schloß in sperrender Stellung ;

Figur 4 einen Schnitt nach II-II in Fig. 3 ;

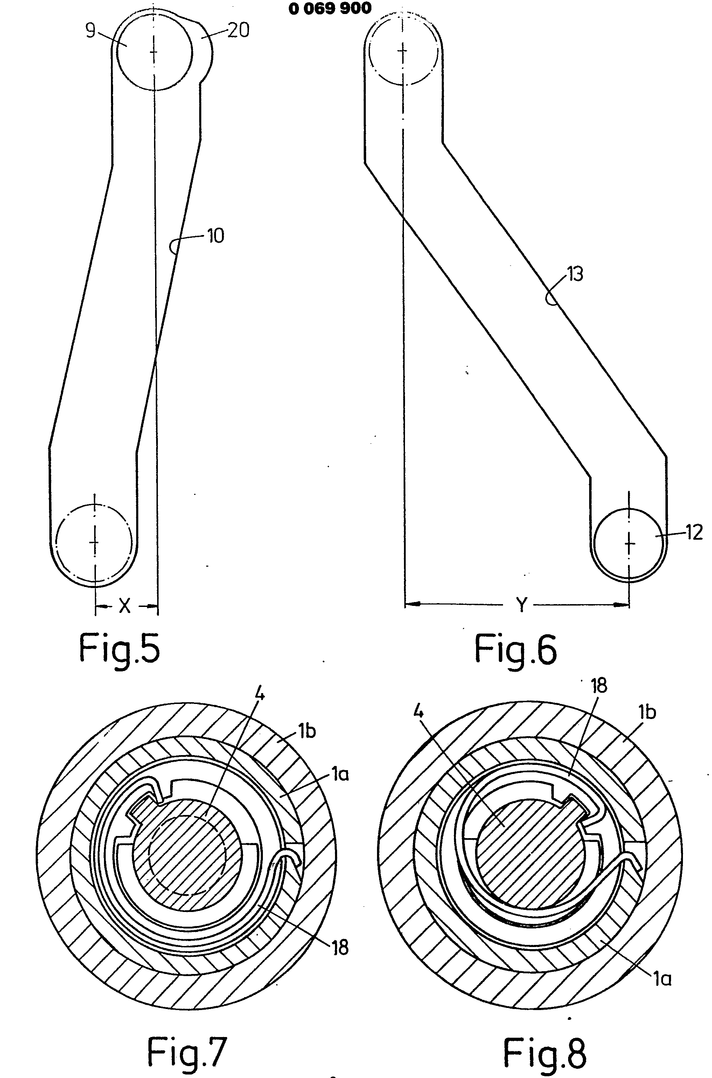

Figur 5 eine Abwicklung der Kurvenbahn im Zylindergehäuse, in der der Zapfen des Steuerringes einliegt ;

Figur 6 eine Abwicklung der Kurvenbahn im Steuerring, in der der Zapfen des Sperrzapfens einliegt.

Figuren 7 und 8 Querschnitte durch das Schloß in Höhe der Drehfeder in beiden Stellungen ; und

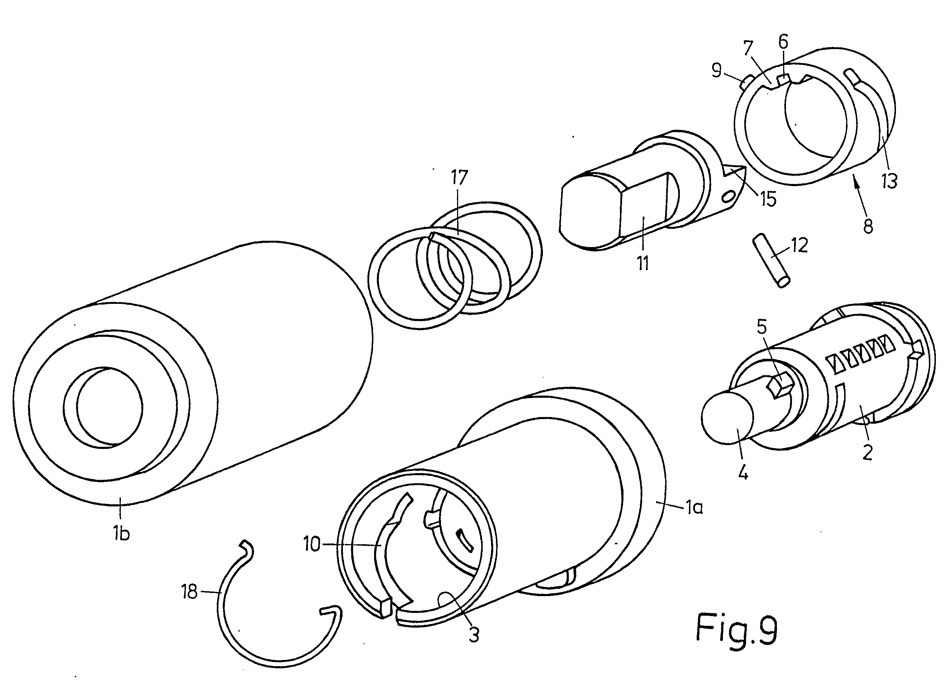

Figur 9 eine isometrische Ansicht der Schloßteile in auseinandergezogenem Zustand.

In einem am Kraftfahrzeug befestigbaren mehrteiligen (1a, 1b) Zylindergehäuse 1 ist ein Zylinderkern 2 in einer koaxialen Bohrung 3 drehbar gelagert. Der Zylinderkern 2 ist durch nicht gezeigte Zuhaltungen in Drehstellungen im Zylindergehäuse arretierbar, wobei die Zuhaltungen durch einen Schlüssel betätigt werden.

Am inneren Ende weist der Zylinderkern 2 einen koaxial vorspringenden Zapfen 4 auf, der einen radial vorspringenden Stift 5 trägt, der in einer Längsnut 6 einliegt, die von einer innen in einem Steuerring 8 angeordneten Verstärkung 7 gebildet wird. Der zum Schloß und dem Zylinderkern koaxiale Steuerring 8 ist buchsenförmig ausgebildet und um seine Längsachse drehbar. Seine Außenwandung ist im Zylindergehäuse gelagert und trägt einen Zapfen oder Nocken 9, der in einer nuten- oder schlitzförmigen Kurvenbahn 10 der Zylindergehäusebohrung einliegt. Wird der Steuerring 8 durch den axial unverschieblichen Zylinderkern 2 gedreht, so wird er axial im Zylindergehäuse 1 verschoben.

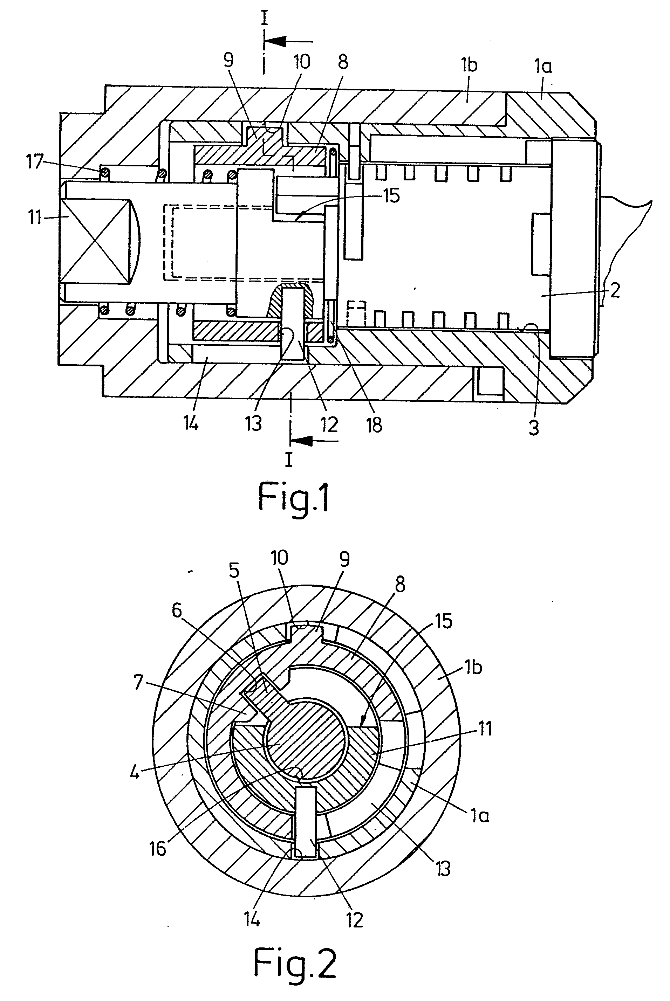

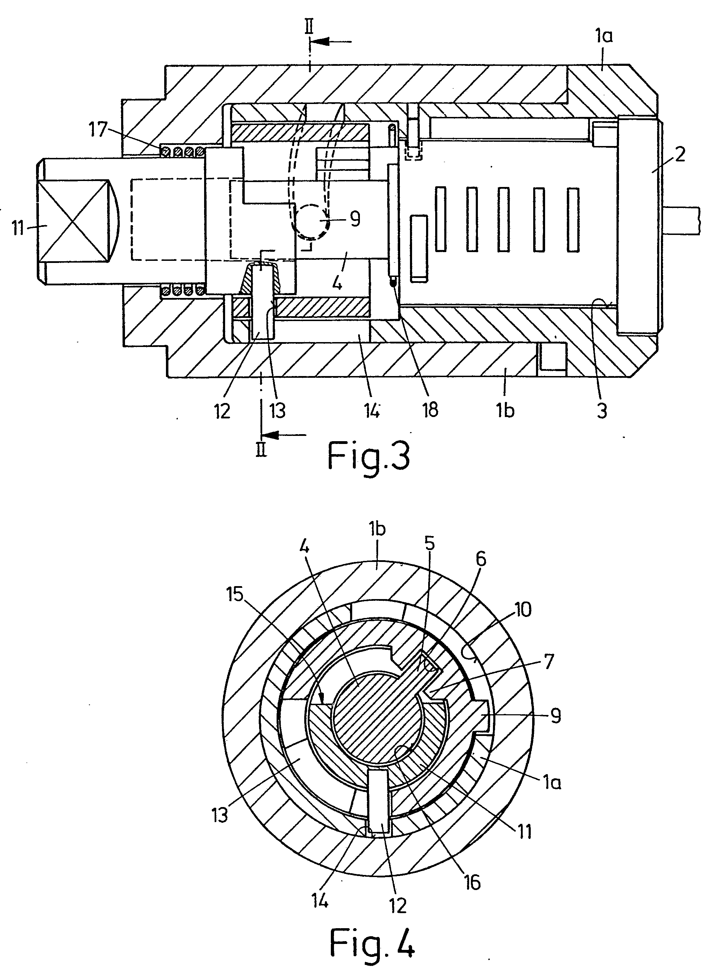

Im Inneren des Steuerrings 8 liegt das innere Ende eines koaxialen Sperrzapfens 11 ein, der mit einem am inneren Ende befestigten radial vorstehenden Stift 12 eine nuten- oder schlitzförmigen Kurvenbahn 13 des Steuerrings 8 durchdringt. Das freie Ende des Stiftes 12 liegt in einem achsparallelen Längsschlitz 14 des Zylindergehäuses ein, so daß der Sperrzapfen 11 drehfest gehalten ist. Wird der Zylinderkern durch den Schlüssel von der in Fig. 1 gezeigten entsperrten Stellung in die in Fig. 3 gezeigte sperrende Stellung gedreht, so entfernt sich der Steuerring 8 durch die Kurvenbahn 10 um 1,5 mm vom Zylinderkern, und darüber hinaus erzeugt das Drehen der Kurvenbahn 13 eine Bewegung des Sperrzapfens 11 vom Zylinderkern weg, wobei die Kurvenbahn 13 eine Bewegung von 5,5 mm erzeugt, so daß sich der Sperrzapfen insgesamt 7 mm nach außen aus dem Zylindergehäuse herausbewegt.

Das innere Ende des Sperrzapfens 11 durchdringt in der entsperrten Stellung den Steuerring 8 vollständig. Dies wird dadurch möglich, daß für die innere Verstärkung 7 des Steuerrings eine Ausnehmung oder Ausfräsung 15 am inneren Ende des Sperrzapfens vorgesehen ist. Ferner weist der Sperrzapfen am inneren Ende eine koaxiale Sackbohrung 16 auf, in der der Zapfen 4 des Zylinderkerns in der entsperrten Stellung des Sperrzapfens einliegt.

Durch eine den Sperrzapfen 11 umgebende Schraubendruckfeder 17 wird der Sperrzapfen gegenüber dem Zylindergehäuse nach innen gedrückt. Ferner ist eine Drehfeder 18 zwischen dem Steuerring 8 und dem Zylinderkern 2 angeordnet, die den Zylinderkern in die entsperrte Stellung dreht. Die Drehfeder 18 besteht aus einer Drahtwicklung von ca. 250° in der entsperrten Stellung.

## Ansprüche

1. Schloß mit einem in einer Bohrung eines Zylindergehäuses (1) drehbar gelagerten, Zuhaltungen aufweisenden, axial nicht beweglichen Zylinderkern (2), durch den ein koaxialer Sperrzapfen (11) über Stift (12) und Kurvenbahn (13) axial bewegt wird, dadurch gekennzeichnet, daß auf der der Schlüsseleinführung gegenüberliegenden Seite des Zylinderkerns (2) im drehfesten Zylindergehäuse (1) ein buchsenförmiger, koaxialer Steuerring (8) gelagert ist, der durch den Zylinderkern (2) drehbar ist und durch eine nuten- oder schlitzförmige Kurvenbahn (10) und darin einliegenden Nocken (9) aufgrund des Drehens axial gegenüber dem Zylinderkern (2) verschiebbar ist, und daß innen im Steuerring (8) das Ende eines drehfesten Sperrzapfens (11) gelagert ist, der durch eine weitere nuten- oder schlitzförmige Kurvenbahn (13) des Steuerrings (8) mit darin einliegenden Nocken (12) gegenüber dem Steuerring (8) aufgrund des Drehens des Steuerrings verschiebbar ist.

2. Schloß nach Anspruch 1, dadurch gekennzeichnet, daß der Zylinderkern (2) zum Antrieb des Steuerringes (8) einen an einem koaxialen, vorspringenden Zapfen (4) angeordneten radialen Vorsprung (5) aufweist, der in einer inneren achsparallelen Längsnut (6) des Steuerringes (8) einliegt.

3. Schloß nach Anspruch 2, dadurch gekennzeichnet, daß die Längsnut (6) des Steuerringes (8) von einer inneren Verstärkung (7) gebildet wird.

4. Schloß nach Anspruch 3, dadurch gekennzeichnet, daß der Sperrzapfen (11) am inneren Ende eine Ausnehmung (15), insbesondere Anflachung zur Aufnahme des Vorsprungs (5) des Zylinderkerns (2) und der Verstärkung (7) des Steuerringes (8) aufweist.

5. Schloß nach einem der Ansprüche 1 bis 4, dadurch gekennzeichnet, daß bei eingefahrenem Sperrzapfen (11) der koaxial vorspringende Zapfen (4) des Zylinderkerns (2) in einer zylindrischen Ausnehmung des Sperrzapfens einliegt.

6. Schloß nach einem der Ansprüche 1 bis 5, dadurch gekennzeichnet, daß der Steuerring (8) an seiner Außenseite einen radialen Nocken (9) aufweist, der in der nuten- oder schlitzförmigen Kurvenbahn (10) in der Innenwandung des Zylindergehäuses (1) einliegt.

7. Schloß nach einem der Ansprüche 1 bis 6, dadurch gekennzeichnet, daß der Sperrzapfen (11) einen radialen Nocken (12) an seiner Außenseite aufweist, der in der schlitzförmigen Kurvenbahn (13) in dem Steuerring (8) einliegt.

8. Schloß nach Anspruch 7, dadurch gekennzeichnet, daß der Nocken (12) des Sperrzapfens (11) die schlitzförmige Kurvenbahn (13) des Steuerringes (8) durchdringt und mit seinem freien Ende in einer achsparallelen Längsnut (14) des Zylindergehäuses (1) einliegt.

9. Schloß nach einem der Ansprüche 1 bis 8, dadurch gekennzeichnet, daß die den Steuerring (8) axial bewegende Kurvenbahn (10) eine geringere Neigung aufweist als die im Steuerring (8) angeordnete Kurvenbahn (13).

10. Schloß nach einem der Ansprüche 1 bis 9, dadurch gekennzeichnet, daß der Sperrzapfen (11) durch eine Feder (17) in das Zylindergehäuse (1) hinein beaufschlagt ist.

11. Schloß nach einem der Ansprüche 1 bis 10, dadurch gekennzeichnet, daß der Zylinderkern (2) durch eine Drehfeder (18) beaufschlagt ist.

12. Schloß nach Anspruch 11, dadurch gekennzeichnet, daß die Drehfeder (18) eine Drahtwicklung von weniger als 360 Grad ist, die zur Schloßlängsachse in einer Querebene in Höhe des inneren Zylinderkernendes liegt.

13. Schloß nach Anspruch 11 oder 12, dadurch gekennzeichnet, daß die den Steuerring (8) axial bewegende Kurvenbahn (10) eine Vertiefung (20) aufweist, in der der Nocken (9) in der Schlüsselabzugsstellung durch die Feder (17) des Sperrzapfens gedrückt wird.

**Claims**

1. Lock with an axially immovable cylinder core (2) mounted rotatably in a bore of a cylinder housing (1) and comprising tumblers, by which core a coaxial locking journal (11) is moved axially through a pin (12) and cam path (13), characterised in that on the side of the cylinder core (2) opposite to the key entry there is mounted in the rotation-fast cylinder housing (1) a coaxial control ring (8) of bush form which is rotatable by the cylinder core (2) and displaceable axially in relation to the cylinder core (2) by a cam path (10) of groove or slot form and a dog (9) lying therein, and in that internally in the control ring (8) there is mounted the end of a rotation-fast locking journal (11) which is displaceable in relation to the control ring (8) by reason of the rotation of the control ring by a further cam path (13), of groove or slot form, of the control ring (8) with dog (12) lying therein.

2. Lock according to Claim 1, characterised in that the cylinder core (2) comprises for the drive of the control ring (8) a radial protuberance (5) arranged on a coaxial, protruding journal (4), which protuberance lies in an inner longitudinal groove (6), parallel with the axis, or the control ring (8).

3. Lock according to Claim 2, characterised in that the longitudinal groove (6) of the control ring (8) is formed by an inner reinforcement (7).

4. Lock according to Claim 3, characterised in that the locking journal (11) comprises at the inner end a recess (15), especially a flattened portion, for the reception of the protuberance (5) of the cylinder core (2) and of the reinforcement (7) of the control ring (8).

5. Lock according to one of Claims 1 to 4, characterised in that when the locking journal (11) is retracted the coaxially protruding journal (4) of the cylinder core (2) lies in a cylindrical recess of the locking journal.

6. Lock according to one of Claims 1 to 5, characterised in that the control ring (8) has on its outer side a radial dog (9) which lies in the cam path (10) of groove or slot form in the inner wall of the cylinder housing (1).

7. Lock according to one of Claims 1 to 6, characterised in that the locking journal (11) comprises a radial dog (12) on its outer side which lies in the cam path (13) of slot form in the control ring (8).

8. Lock according to Claim 7, characterised in that the dog (12) of the locking journal (11) penetrates the cam path (13) of slot form of the control ring (8) and lies with its free end in a longitudinal groove (14), parallel with the axis, of the cylinder housing (1).

9. Lock according to one of Claims 1 to 8, characterised in that the cam path (10) which moves the control ring (8) axially has a smaller inclination than the cam path (13) arranged in the control ring (8).

10. Lock according to one of Claims 1 to 9, characterised in that the locking journal (11) is loaded by a spring (17) into the cylinder housing (1).

11. Lock according to one of Claims 1 to 10, characterised in that the cylinder core (2) is loaded by a torsion spring (18).

12. Lock according to Claim 11, characterised in that the torsion spring (18) is a wire turn of less than 360° which lies, in relation to the longitudinal axis of the lock, in a transverse plane at the level of the inner end of the cylinder core.

13. Lock according to Claim 11 or 12, characterised in that the cam path (10) which axially moves the control ring (8) comprises a depression (20) into which the dog (9) is pressed by the spring (17) of the locking journal, in the key withdrawal position.

**Revendications**

1. Serrure avec un barillet cylindrique (2) monté pivotant dans un alésage d'un boîtier de cylindre (1), présentant des paillettes, non mobile axialement, par lequel un tenon de blocage (11) est déplacé axialement par l'intermédiaire d'une cheville (12) et d'un chemin incurvé (13), caractérisé en ce qu'une bague de commande (8) coaxiale en forme de douille est logée du côté du barillet cylindrique (2) opposé à l'entrée de clé dans le boîtier de cylindre (1) fixe, qui peut pivoter par l'intermédiaire du barillet cylindrique (2) et peut coulisser axialement par rapport au barillet cylindrique (2) par l'intermédiaire d'un chemin incurvé (10) en forme de rainure ou de fente et d'un ergot (9) logé dedans sous l'effet de la rotation, et que, à l'intérieur dans la bague de commande (8), est logée l'extrémité d'un tenon de blocage (11) fixe en rotation qui, par l'intermédiaire d'un autre chemin incurvé (13) de la bague de commande (8) en forme de rainure ou de fente avec un ergot (8) logé dedans, peut coulisser par rapport à la bague de commande (8) du fait de la rotation de la bague de commande.

2. Serrure selon la revendication 1, caractérisée en ce que le barillet cylindrique (2) présente, pour entraîner la bague de commande (8), une saillie (5) radiale ménagée sur un tenon (4) coaxial en saillie, laquelle saillie (5) est logée dans une rainure longitudinale (6) intérieure à axe parallèle de la bague de commande (8).

3. Serrure selon la revendication 2, caractérisée en ce que la rainure longitudinale (6) de la bague de commande (8) est formée par un renforcement intérieur (7).

4. Serrure selon la revendication 3, caractérisée en ce que le tenon de blocage (11) présente à l'extrémité intérieure un évidement (15), en particulier un méplat, de réception de la saillie (5) du barillet cylindrique (2) et du renforcement (7) de la bague de commande (8).

5. Serrure selon l'une des revendications 1 à 4, caractérisée en ce que le tenon de blocage (11) étant en retrait, le tenon (4) coaxial en saillie du barillet de serrure (2) est logé dans un évidement cylindrique du tenon de blocage.

6. Serrure selon l'une des revendications 1 à 5, caractérisée en ce que la bague de commande (8) présente sur une face externe un ergot radial (9) qui est logé dans le chemin incurvé (10) en forme de rainure ou de fente dans la paroi interne du boîtier de cylindre (1).

7. Serrure selon l'une des revendications 1 à 6, caractérisée en ce que le tenon de blocage (11) présente un ergot radial (12) sur une face externe qui est logé dans le chemin incurvé (13) en forme de fente dans la bague de commande (8).

8. Serrure selon la revendication 7, caractérisée en ce que l'ergot (12) du tenon de blocage (11) traverse le chemin incurvé (13) en forme de fente de la bague de commande (8) et est logé par son extrémité libre dans une rainure longitudinale (14) à axe parallèle du boîtier de cylindre (1).

9. Serrure selon l'une des revendications 1 à 8, caractérisée en ce que le chemin incurvé (10) qui déplace axialement la bague de commande (8) présente une pente inférieure à celle du chemin incurvé (13) ménagé dans la bague de commande (8).

10. Serrure selon l'une des revendications 1 à 9, caractérisée en ce que le tenon de blocage (11) est rappelé par un ressort (17) vers l'intérieur dans le boîtier de cylindre (1).

11. Serrure selon l'une des revendications 1 à 10, caractérisée en ce que le barillet cylindrique (2) est soumis à l'action d'un ressort de torsion (18).

12. Serrure selon la revendication 11, caractérisée en ce que le ressort de torsion (18) est constitué par un enroulement de fil de moins de 360 degrés, qui est logé par rapport à l'axe longitudinal de la serrure dans un plan incliné dans la hauteur de l'extrémité intérieure du barillet cylindrique.

13. Serrure selon l'une des revendications 11 et 12, caractérisée en ce que le chemin incurvé (10) qui déplace axialement la bague de commande (8) présente un évidement (20) dans lequel l'ergot (9) est comprimé par le ressort (17) du tenon de blocage en position d'extraction de clé.

Fig.1

Fig.2

Fig.3

Fig. 4

Fig.5

Fig.6

Fig.7

Fig.8

3

Fig.9